# EUROPEAN PATENT APPLICATION

(11) **EP 4 761 176 A1**
(43) Date of publication of application: **17.06.2026**
(21) Application number: 24219924.8
(22) Date of filing: 13.12.2024
(51) Int. Cl.: H04L 9/40, G06F 21/60, G06F 21/85, G06F 21/86

(54) **END POINT DEVICE AND COMMUNICATION METHOD FOR TRANSMITTING DATA**

(71) Applicant: Nagravision Sarl, 1033 Cheseaux-sur-Lausanne (CH)
(72) Inventor: Gagliardoni, Tommaso, Cheseaux-sur-Lausanne (CH)
(74) Representative: Parker, Andrew James

(57) **Abstract**

The present disclosure relates to securing a communication connection, in particular, the present disclosure relates to forcing encryption over a communication connection between two communication nodes. There may be a need for securing a communication connection between two communication nodes, for example by end-to-end encryption and also for securing a communication connection between two communication nodes in a transparent and communication node independent manner. Accordingly, there is provided an end point device (100) for transmitting data, comprising a first data interface (110a), a second data interface (110b), wherein data received at the first data interface (110a) is transmitted to the second data interface (110b), wherein data received at the second data interface (110b) is transmitted to the first data interface (110a), wherein at least one of the first data interface (110a) and the second data interface (110b) is arranged for establishing a communication connection to an external device, a processing element (112) arranged to encrypt and decrypt data, wherein data received at the first data interface (110a) is encrypted before transmitting onwards from the second data interface (110b), wherein data received at the second data interface (110b) is decrypted before transmitting onwards from the first data interface (110a), and wherein the processing element (112) is arranged for symmetric encryption and decryption.

## Description

### TECHNICAL FIELD

The present disclosure relates to data communication. In particular, the present disclosure relates to securing a communication connection. Further in particular, the present disclosure relates to forcing encryption over a communication connection between two communication nodes.

### BACKGROUND

The present disclosure is concerned with securing a communication connection established between two communication nodes for the exchange of data between said communication nodes. The communication connection may be for example, a direct communication connection, where the communication nodes are the terminal points of the communication connection. Each communication node may be a source node or a target node or both of the communication connection. Alternatively or additionally, a communication node may be an intermediary communication node, thereby relaying data to still at least one further communication node. In the context of the present disclosure, the terms data, data packet and information may be used interchangeably.

Data encryption may be crucial when transmitting data via such a communication connection, e.g., a physical communication connection or transmission medium, like a cable, or a wireless communication connection, transmitting data via electromagnetic radiation, as it helps ensuring the confidentiality, integrity, and authenticity of the data being transmitted.

Encryption ensures confidentiality as it scrambles data into an unreadable format, ensuring that only authorised entities with the correct decryption key can read the data. This prevents eavesdropping, even if the communication connection is intercepted by unauthorised third parties. Encryption may ensure data integrity as it may also include mechanisms to detect any tampering with the data. If an unauthorised third party tries to alter the data information during transmission, it becomes apparent when the data is decrypted, ensuring that any attempt to modify the data is detected. Encryption protocols may include methods for verifying the identity of the sender and recipient communication nodes, ensuring that data is being transmitted between trusted entities and has not been intercepted by a malicious third party, thereby providing authentication of said communication nodes. Encryption may protect physical access to the communication connection. Cables, such as ethernet, USB or fiber-optic cables, may be physically tapped by malicious third parties to intercept data. Encryption ensures that even if an attacker physically accesses the transmission medium, the transmitted data remains secure and unusable without the encryption keys. Encryption thus assures that the transmitted data remains secure and private, even in scenarios where the communication connection, e.g., a physical medium like a cable, is exposed or compromised.

By encrypting data transmitted e.g., via a physical communication connection, it may be avoided that the data transmitted is obtained by spoofing the electromagnetic emanation from said physical communication connection from a distance.

One particular example of a communication connection is a USB communication connection between two communication nodes or USB-enabled devices. The Universal Serial Bus (USB) is a ubiquitous technology for connecting two communication nodes, e.g., peripheral devices to computers. The convenience and versatility of USB have made it a popular choice for a wide range of applications, from consumer electronics to operational technology (OT) environments. However, such widespread use also exposes USB connections to various security vulnerabilities, particularly in scenarios where security and data integrity are critical. In this context, conventionally, USB data is transferred using data packets that are not encrypted by default. This characteristic means that data sent between target devices is susceptible to interception and manipulation. In a standard USB connection setup, data is transmitted in plain text, making it easily readable, and even modifiable, if captured by an unauthorized third party.

In OT environments, USB devices are often used to connect critical systems and equipment. Operational technology is hardware and software that detects or causes a change, through the direct monitoring and/or control of industrial equipment, assets, processes and events. The integrity and confidentiality of the data exchanged between such devices may be paramount, especially when considering scenarios like remote operations and monitoring of industrial processes. The potential interception or tampering with operational data could lead to severe consequences, including system downtime, safety incidents, and unauthorized control of physical processes.

One possible attack vector involves an attacker with physical access to a USB cable who is able to disconnect the cable and insert a recording device. This device, often referred to as a USB passthrough recorder, captures all data transmitted via the USB interface without the knowledge of either communication party. Typical examples are physical keyboard keyloggers.

Another attack vector involves non-invasive sniffing, where an attacker uses a device capable of detecting electromagnetic fields, such as a coil sniffer, placed near or around the USB cable. This technique may be able to capture data transmitted over the communication connection by recognising the electromagnetic emanations that occur naturally during electrical signalling.

Still further, the use of an untrustworthy USB hub may also pose a significant threat. A malicious hub integrated into the data transmission path can act as a man-in-the-middle attack vector, intercepting and possibly altering the data passing through it.

In order to solve these problems, it would be desirable that the USB line between the device and the computer is end-to-end encrypted. However, most devices do not support this, and may be unreasonable to verify, e.g. that all devices in a large OT deployment support encryption correctly.

Thus, there may be a need for securing a communication connection between two communication nodes, for example by end-to-end encryption.

Further, there may be a need for securing a communication connection between two communication nodes in a transparent and communication node independent manner.

### SUMMARY

At least one such need may be met by the subject-matter of the independent claims. Preferred embodiments are provided in the dependent claims and are explained in detail in the following description.

The present invention generally relates to securing a communication connection.

According to a first aspect of the disclosure, there is provided an end point device for transmitting data, comprising a first data interface, a second data interface, wherein data received at the first data interface is transmitted to the second data interface, wherein data received at the second data interface is transmitted to the first data interface, wherein at least one of the first data interface and the second data interface is arranged for establishing a communication connection to an external device, a processing element arranged to encrypt and decrypt data, wherein data received at the first data interface is encrypted before transmitting onwards from the second data interface, wherein data received at the second data interface is decrypted before transmitting onwards from the first data interface, and wherein the processing element is arranged for symmetric encryption and decryption, and a memory element, wherein the memory element is adapted to store an encryption/decryption key for use in the symmetric encryption and decryption, wherein the encryption/decryption key is hardcoded in the memory element.

According to a second aspect of the disclosure, there is provided a set of two end point devices for transmitting data according to the present disclosure, the first end point device being connected to the second end point device via a communication link,.

According to a third aspect of the disclosure, there is provided a communication method for transmitting data, providing two end point devices for transmitting data according to the present disclosure, wherein each of the two end point devices comprise the same encryption/decryption key, so that data encrypted with one of the two end point devices can be decrypted with the other one of the two end point devices, arranging said two end point devices at opposite ends of a communication link to encrypt data and/or data packages to be transmitted through the communication link.

According to a fourth aspect of the disclosure, there is provided method for detecting removal of a device, comprising providing a device for transmitting data, comprising a first data interface, a second data interface, wherein data received at the first data interface is transmitted to the second data interface, wherein data received at the second data interface is transmitted to the first data interface, and wherein at least one of the first data interface and the second data interface is arranged for establishing a communication connection to an external device, the method comprising establishing a communication connection, determining physical properties of the communication connection, and comparing previously determined physical properties with currently determined physical properties, wherein in the event that the comparison determines that the previously determined physical properties and the currently determined physical properties are substantially identical, establish or maintain the communication connection, and wherein in the event that the comparison determines that the previously determined physical properties and the currently determined physical properties are substantially non-identical, perform at least one action out of the group consisting of disabling the communication connection, and providing an indication, for example to an external device, that the physical properties have changed.

According to a fifth aspect of the disclosure, there is provided a computer program product or a computer readable storage medium comprising instructions which, when the program is executed by a processing element, cause the processing element to carry out at least one of the methods according to the present disclosure.

The present invention provides an end point device for transmitting data, e.g., a physical USB device or dongle, which establishes one communication node of a communication link to be secured. In case of a physical communication link, a pair of such end point devices may be plugged to the end connectors of the communication link, for example a USB connection, to enforce encryption of the data flow in a transparent way at a low cost. These end point device may be deployed in large numbers in loT and OT installations within an organization. In order to provide the intended functionality, each end point device of a pair of end point devices must be arranged and able to decrypt the data that the other end point device of the pair has encrypted and vice versa. For example, each end point device of the pair may contain the same (symmetric) encryption/decryption key, and is thereby enabled to decrypt data that the respective other end point device of the pair has encrypted.

The end point devices may thus be provided in pairs. Each end point device may have two data interfaces, for example a male and a female USB connector (e.g. USB-A or USB-C). The end point devices of such a pair may be installed at both ends of the communication link, e.g., a USB cable connecting a host device and aclient device, or generally two target devices. The end point devices may use very little energy, and may be powered by "leeching" energy of the communication connection, for example the USB power line, thereby not requiring external power. During the establishing phase of the communication connection (e.g., an initial USB handshake or the initial connection of the two communication nodes the communication link is connecting when the end point devices are connected between each of the communication nodes and the communication connection) the end point devices may behave transparent, i.e., do not interfere with the data transmission. However, once the communication connection is established, the end point devices are arranged to modify data, e.g., data packets by adding a layer of encryption. In particular, the data payload of the communication may be encrypted, or alternatively the complete data transmitted may be encrypted, i.e., the complete communication between the end point devices.

The following description uses an USB context; however the same principles may be applied to any other suitable communication standard or communication connection referred to in this disclosure, such as an HDMI connection.

The end point devices detect data packets by sniffing the USB traffic and are arranged to detect when the endpoint setup is complete. At this time, the end point devices switch to an active mode. In active mode, the host device, i.e., the device arranged at the host side of a USB connection, listens for polling requests from the host; when a poll request is detected, the end point device attached to the host device encrypts it or rather the data or data packets associated with said poll request, forwards it to the other end point device of the pair of end point devices on the client or device side of the USB connection, which in turn decrypts it and forwards it to the client device. When the client device responds to the poll request with data or a data packet, the end point device on the client side encrypts it and sends it to the end point device on the host side, where it is decrypted before transmitting onwards to the host device. All these detections and forwarding functionalities use very little power, except for the encryption and decryption steps, which may be more or less energy-expensive depending on the cryptography used.

The end point devices may have an embedded secure element which stores a secret key, having e.g. 80, 128, 160 or 256 bits. The key is identical for both end point devices of a pair of end point devices. Preferably, the key is stored in the end point device pair at manufacturing time, i.e., in the factory, and cannot be read or modified externally afterwards. The secret key is used to perform encryption and decryption, for example using a lightweight stream cipher, e.g. LESCA. Such a cipher keeps the power consumption low, and also does not increase the size of data or data packets by adding any extra payload, so that the amount of protected (encrypted) data (i.e., bits/bytes) is the same as the original (unencrypted) data or data packets. Such a cipher may also be very fast, so that encryption and decryption of data packets may happen transparently and may not impact the communication throughput of a USB communication.

For example, conventional IOT and similar devices usually use low USB speeds, rarely requiring USB-3 or comparable superior bandwidth so that the data transmission is not impacted by the additional time required for encryption and decryption. This also reduces the computational requirements a processing element in a device needs to have, thus a lower cost/lower performance processing element may be sufficient to perform the encryption and decryption. In case higher speeds are required, and the encryption/decryption engine is not fast enough to sustain those throughputs, the devices may "cap" the maximum link speed detected by the communication nodes by modifying the response of a communication node during a bus reset phase, so to advertise a lower speed to the other communication node.

A stream cipher algorithm as described and employed in this disclosure is an example of such an encryption/decryption algorithm. In other words, an encryption may employ a certain logical function on unencrypted data to encrypt said data, and the decryption may employ the same logical function on the encrypted data to decrypt the said. Thus, executing the same encryption/decryption algorithm twice on data results in obtaining again the identical original data. Thereby, the processing element may not be required to distinguish between encrypted and unencrypted data, as using the same logical function on either kind of data simply transfers unencrypted data into encrypted data and encrypted data to unencrypted data. In other words, same computation may be used to encrypt data and decrypt data, since with a stream cipher, the encryption algorithm and the decryption algorithm may correspond to one another such that a double encryption (or a double decryption) again results in unencrypted data. In order to obtain unencrypted data from encrypted data, the value of a counter in the progression of the stream cipher used for the decryption (or encryption) needs to correspond to the value of the counter used for the encryption (or decryption).

The initial state of the stream cipher may be set to the same fixed, hardcoded value when the devices are first powered up, which may be increased at every packet encryption/decryption (as a counter), and it is reset to the initial value when the devices are powered off. This way, the devices may never de-synchronize under normal circumstances, because to every packet encryption (at one end) corresponds exactly to one packet decryption (at the other end) in the same sequence. However, in case some unexpected error happens (e.g., one packet is lost due a transmission error), this may easily be detected by the host system by noticing a communication malfunction in the USB link, and then the devices may be resynchronized by resetting the USB connection. Also, because a stream cipher works in the same way both in the encryption and decryption direction, the devices do not need to communicate to disambiguate which one of the pair should perform encryption and which one should perform decryption as both devices are able to perform the same operation on data or data packets. This mechanism may also protect the data link against sniffing or eavesdropping.

In order to facilitate the use and to identify which end point devices form a pair, an identification code may be printed on the end point devices. This code may be a unique one-way derivation of the embedded secret key, for example the SHA-3 hash (or a shortened version of it) of the secret key. This may allow to identify two end point devices forming a pair. These will be able to communicate if and only if the identification code printed on them is the same. The end point device manufacturer may also keep a confidential and protected database of identification codes and their respective secret keys. This would allow the user to, e.g., order a replacement end point device in case one of the pair of end point devices is damaged or lost.

Such end point devices according to the present disclosure may come with mechanical (male and female) connectors that are designed to be easily inserted, but impossible or very hard to remove without physically damaging the connectors and/or (mechanically) destroying part of the end point device, be that the connector, electronics inside the device, e.g., the processing element used for encryption and decryption, the memory element, the secure element for storing the secret key, or some or all of those. Potentially, a unique physical (un)locking key may be used to remove the end point device from the connector. Such a locking would make sure that an adversary may not simply remove a end point device or a pair of end point devices and re-plug a thus unprotected cable. In particular physically destroying a connector or other, e.g., internal, part of an end point device upon unauthorized removal facilitates detection of malicious activity and an intrusion attempt.

The memory element may be a non-volatile memory element, in particular be a secure element, and may be arranged, inter alia, for storing the encryption/decryption key. When manufacturing an end point device, the key may be stored in the memory element in the factory. The memory element may in particular be protected from being changed and/or read out. Thus, after manufacture of the end point device and the initial storing of the key in the memory, the key may not be altered anymore, and a user of the end point device may be unable to extract the key from the end point device/the memory element/the secure element. Thereby, unauthorized copying, or otherwise imitating the encryption/decryption functionality of the end point device may be avoided.

In the following, flow of a direct USB connection between a USB device and a USB host is described, i.e., it generally describes what happens conventionally when connecting a USB device to a host system, e.g. a computer.

Device Insertion: Upon inserting the USB device into the port, the physical metal contacts connect, establishing the electrical pathways necessary for communication and power supply.

Power Supply: The USB connector provides power to the device, which is crucial for passive devices like keyboards. For more power-intensive devices like webcams, initial power is provided to start up the USB device.

Bus Reset: The host device (e.g., a computer) sends a reset signal over USB to ensure that the USB device starts is a clean, defined state. This reset also facilitates recognizing the speed at which the USB device is capable of communicating (Low, High, or Full speed). After the reset, the USB device enters a default state, where it awaits further instructions from the USB host.

Device Descriptor Request: The USB host requests the USB device descriptor using a standard USB request to the default address (address 0). The USB device descriptor contains essential information about the USB device, such as manufacturer ID, product ID, device class, and maximum packet size for endpoint zero (control endpoint).

Address Assignment: Once the USB device descriptor is retrieved and understood, the USB host assigns a unique address to the USB device. Post-assignment, the USB device responds only to its assigned address.

Configuration Descriptor Request: The USB host further requests the configuration descriptor, which includes detailed information about all configurations the USB device supports. This information may include specific details about each configuration, interfaces, and endpoints other than the control endpoint.

Set Configuration: The USB host sends a command to set the USB device to a specified configuration. Once configured, the USB device is ready to perform its designated functionality.

Class-Specific Configuration: Depending on the type of USB device (keyboard, webcam, etc.), additional class-specific setup may be necessary. For a keyboard, this might involve loading the appropriate HID (Human Interface Device) drivers and setting up key mapping as per the host's operating system. For webcams, it often involves loading specific drivers that may handle video data, setting video formats, resolutions, and initializing video stream management.

Endpoint Setup: USB devices use endpoints to define various channels for data transmission. There are typically one or more endpoints dedicated to specific types of data transfer, e.g., control, interrupt, bulk, and isochronous transfers. Control Endpoint: Used for sending control signals and setup information. Interrupt/Bulk/Isochronous Endpoints: Used for actual data transfer (e.g., keystrokes for keyboards or video frames for webcams).

Polling: USB uses a polling mechanism where the USB host regularly checks the USB device for data rather than the device sending data autonomously. This polling is frequent and ensures timely data transfer without the need for the USB device to signal the host independently.

Device Monitoring: The host continuously manages and monitors the device's status through control messages. If a device is unplugged, the host detects this change and updates the system to remove the device drivers and settings associated with the disconnected device.

According to an embodiment of the present disclosure, data, e.g., received data and/or transmitted data may comprise at least one data packet, the at least one data packet may comprise at least one field, and the processing element may be arranged to encrypt and decrypt the information content of the at least one field.

According to a further embodiment of the present disclosure, data, e.g., received data and/or transmitted data may comprise at least one data packet, the at least one data packet may comprise a plurality of fields, and the processing element may be arranged to encrypt and decrypt the information content of only a subset of the plurality of fields.

According to a further embodiment of the present disclosure, data, e.g., received data and/or transmitted data may comprise at least one data packet, the at least one data packet comprises a plurality of fields, and the processing element may be arranged to encrypt and decrypt the information content of the entirety of the plurality of fields.

According to a further embodiment of the present disclosure, data, e.g., received data and/or transmitted data may comprise at least one data packet, and the processing element may be arranged to encrypt and decrypt the entirety of the data packet.

According to a further embodiment of the present disclosure, the at least one field may be a field out of the group consisting of sync field, PID field, data field, CRC field and further field type, and /or wherein the at least one data packet may be a data packet out of the group consisting of token packet, data packet, handshake packet, state of frame packet, pre-error packet and further packet type.

USB communication is based on a protocol that breaks down data exchange into specific types of packets. Such packets are used for synchronization, error detection, and control of the flow of data between devices. There are several types of data packets in USB communication, each serving a specific purpose.

Token packets are used to initiate transactions by identifying the direction of the data (in or out), the device, and the endpoint involved. Token packets comprise the following fields and functions. PID (Packet Identifier) field: This field identifies the type of packet. For a token packet, the PID can be OUT, IN, or SETUP to indicate whether the host is sending data, requesting data, or initiating a control transfer, respectively. Address field: This field contains the address of the device, up to 127 devices can be addressed. Endpoint field: The endpoint field specifies which endpoint (channel) on the device the transaction is directed to. USB devices can have multiple endpoints for different functions. CRC (Cyclic Redundancy Check) field: This field contains an error-checking code to ensure the integrity of the token packet.

Different Token Packet types are known: OUT Token: Signals that the host will send data to the device. IN Token: Signals that the host is requesting data from the device. SETUP Token: Used to start a control transfer, which is used to send configuration or command information.

Data packets carry actual data between the host device and the USB device. Data packets comprise the following fields and functions. PID (Packet Identifier) field: The PID field indicates the type of data packet, which can be DATA0, DATA1, DATA2, or MDATA. The DATA0 and DATA1 PIDs are used for error detection and retransmission in a simple alternating pattern. Data Payload field: This field contains the actual data being transferred, with a maximum size that depends on the transfer type and USB version. For example, USB 2.0 allows up to 1024 bytes in high-speed mode. CRC field: The Cyclic Redundancy Check is used to detect transmission errors in the data payload.

Different Data Packet types are known: DATA0/DATA1: Used in data transfer and linked to the protocol's error detection and retransmission process. DATA2/MDATA: These are less common and used in certain high-speed modes and protocols (e.g., USB 3.0).

Handshake packets are used to acknowledge the receipt of data or indicate errors. Handshake packets comprise the following fields and functions. PID (Packet Identifier) field: Handshake packets only consist of the PID field, which identifies the packet as an acknowledgment (ACK), negative acknowledgment (NAK), or stall (STALL). There are no data payload or CRC fields in handshake packets.

Different Handshake Packet types are known: ACK: Acknowledges the successful receipt of data. NAK: Indicates that the device is unable to send or receive data at the moment, often used for flow control. STALL: Indicates an error condition where the device cannot process the request, usually signalling a problem that needs to be resolved before communication can continue.

Start-of-Frame (SOF) packets are used to synchronize time on the bus and indicate the start of a new frame in isochronous (time-sensitive) transfers.

SOF packets comprise the following fields and functions. PID (Packet Identifier): Identifies the packet as an SOF packet. Frame Number field: This field contains a number that identifies the frame, which allows devices to maintain synchronization with the bus. CRC field: As with other packets, SOF packets include a CRC for error checking. SOF packets are typically sent every 1 millisecond (USB 1.1/2.0) or 125 microseconds (USB 2.0 high-speed mode) to maintain synchronization in time-critical operations like audio or video streams.

Pre-Error (PRE) packets are used in USB 1.1 for low-speed communication over mixed-speed USB buses, indicating that the upcoming transmission is for a low-speed device.

PRE packets comprise the following fields and functions: PID (Packet Identifier) field: The PID field is used to indicate that this is a preamble for low-speed communication. This packet is followed by data specific to low-speed devices to ensure compatibility on mixed-speed buses.

Each packet type plays a critical role in managing data transfers, ensuring error-free communication, and synchronizing time-sensitive processes in USB communication systems.

By encrypting the information content of a specific field, a plurality of fields, the entirety of fields or an entire data packet, a device may influence to what extent the communication between a pair of devices is secured by encryption. For example, it may be sufficient to encrypt data packets or rather specific fields of data packets only, as these carry the actual data exchanged between the host device and the USB device. Therefore, by encrypting for example, the data payload field only, the data or information to be exchanged between the USB device and the host device traveling over the communication link between the pair of devices according to the present disclosure is secured. Additionally or alternatively, encrypting more or all fields or all data packets exchanged or rather transported between the pair of devices may increase the security. Since the encrypted data must travel between the pair of devices according to the present disclosure, as these are arranged at the opposite ends of the communication link to be secured, for the functional fields like for example address fields may not be required for data transfer.

The information content of such fields or data packets in general may be seen as the individual logical bits or bytes transmitted.

According to a further embodiment of the present disclosure, the first data interface and second data interface may be arranged as physical connectors each for connecting the end point device to a further electrical device or cable.

Physical connectors or electrical connectors may essentially correspond to the male and female plugs or connectors used to establish an electrical connection between a end point device according to the present disclosure and an externaldevice or element, like for example a USB device, a host device or a cable.

According to a further embodiment of the present disclosure, the first and second data interface may be a USB type interface, for example a USB connector having a USB type connector, or one of the first data interface and second data interface may be arranged each as physical connector for connecting the end point device to an external electrical device or cable, and the other one of the first data interface and second data interface may be arranged as a wireless communication interface, for example wireless LAN, or the first data interface and second data interface may be arranged each as a wireless communication interface, for example wireless LAN.

In the context of USB, such connectors may for example be according to the USB-A or USB-C standard. Likewise, the communication link may be established wirelessly by electromagnetic transmission between end point devices. Such an electromagnetic transmission may be a proprietary transmission, or may use known transmission standards like wireless LAN, Wi-Fi, 5G or LTE. Thereby, the communication between a pair of end point devices may be tailored flexibly to the requirements of a particular application scenario.

According to a further embodiment of the present disclosure, at least one of the first data interface and second data interface may comprise a physical connector that is arranged, once plugged in, to resist physical unplugging.

Resisting physical unplugging may in particular be understood as having mechanical (male and female) connectors that are designed to be easily inserted, but impossible to remove without physically damaging the connector or ports and/or (mechanically) destroying part of the end point device, be that the connector, electronics inside the device, e.g., the processing element used for encryption and decryption, the memory element, the secure element for storing the secret key, or some or all of those. Potentially, a unique physical (un)locking key may be used to remove the end point device from the port. Such a locking would make sure that an adversary may not simply remove a end point device or a pair of end point devices and re-plug a thus unprotected cable. In particular physically destroying a connector or port or internal part of an end point device upon unauthorized removal facilitates detection of the malicious activity and intrusion attempt.

Thus, resisting physical unplugging may be seen as destroying at least a part of one of the end point devices, like an electrical connector thereof and/or a memory element or secure element, used storing the key used for encrypting and decrypting data.

According to a further embodiment of the present disclosure, each of the two end point devices may comprise the same encryption/decryption key, so that data encrypted with one of the two end point devices may be decrypted with the other one of the two end point devices.

According to a further embodiment of the present disclosure, a pair of end point devices may be adapted to be arrangeable at opposite ends of a communication link, for example a data cable, to encrypt data and/or data packages to be transmitted through the communication connection.

According to a further embodiment of the present disclosure, a pair of end point devices may be integrally formed with a physical communication link, for example a data cable.

Providing a pair of end point devices using the same key may facilitate the application to secure a, physical or nonphysical, communication link between said pair of end point devices. It may thereby be irrelevant at which side of a communication link one of the two end point devices is connected to, as both devices essentially feature identical functionality and operation, and are thereby exchangeable. In other words, it is irrelevant which end point device of a pair of end point devices is plugged at the USB device side, and which end point device of a pair of end point devices is plugged at the host device side of the communication link.

Integrally forming the pair of end point devices with the physical connection may mean that the all electronics of both end point devices of a pair of end point devices is included in a single (for example male-to-male USB) cable, where two independent processing elements (potentially including independent memory elements or secure elements) for performing encryption/decryption of the data are placed at the ends of the cable, so that only encrypted information flows through the length of the cable. This would facilitate installation and operation as there is no need to keep track of two separate end point devices having the same key.

According to a further embodiment of the present disclosure, the end point device may further comprise a sensor element arranged to determine physical properties of the communication connection toward a host or target device, and the end point device may be arranged to store the determined physical properties.

According to a further embodiment of the present disclosure, the end point device may be arranged to compare previously determined physical properties with currently determined physical properties, wherein in the event that the comparison determines that the previously determined physical properties and the currently determined physical properties are substantially identical, establish or maintain the communication link, and wherein in the event that the comparison determines that the previously determined physical properties and the currently determined physical properties are substantially non-identical, perform at least one action out of the group consisting of disabling the communication link, providing an indication, for example to an external device, that the physical properties have changed and disable at least one of the encryption and decryption.

By determining physical properties of the communication connection, the end point device is able to determine the physical properties of the communication connection at a defined point in time. Physical properties as understood herein may be any physical, electrical or logical parameter that the device is able to determine. For example, physical properties may be any one or more of the following: the resistance of a wire connection, the speed of a connection, the amplitude of a transmitted signal, e.g., the specific voltage value, the strength of a wireless signal, the latency of the signal to a further communication entity or communication node, a signal phase shift, or a plurality thereof.

By storing at least one of a previously determined physical property, the end point device may compare a currently determined property with a previously determined property. Changes occurring in the communication connection may thus result in a change of at least one of the properties so that the end point device can determine that the communication connection has changed. The extent of change between a previously determined property and a currently determined property may be indicative of the type of change. For example, a minor change in the resistance of the communication connection may simply be due to a varying environmental temperature, while a significant change in the resistance may be indicative that the connection has been tampered with, e.g., by changing devices connected to the communication connection.

Whether a comparison of physical properties is determined to be identical or non-identical may depend on an allowable deviation of a property value from previous property values as described above. Therefore, even a minor deviation between property values may be acceptable and may result in the determination that the values are still essentially identical.

Depending on the outcome of the comparison, i.e., whether it has been determined that the physical properties are substantially identical or substantially non-identical, the device may initiate certain measures. Identical physical properties may simply result in a continuation of operation, whereas an identified change in physical properties so that the physical properties are considered non-identical may result in an action to counter any assumed tampering attempt.

For example, upon determination of such a tampering attempt, the end point device may simply stop the communication with the other end point device, thereby disabling the communication link. Alternatively, or additionally, the end point device may inform other devices or users about said determined change in the physical properties by providing an indication that the physical properties have changed. Still further, the end point device may disable at least one of the encryption and decryption, so that a further end point device relying on said encryption or decryption of data is either unable to communicate anymore or realizes by the loss of encryption/decryption that the communication connection has been tampered with. Thus, simply by disabling encryption and/or decryption a further end point device may ascertain the tampering attempt without actively being informed thereof.

The physical properties may be determined for a communication connection from or via the first data interface, the second data interface or both.

According to a further embodiment of the present disclosure, the end point device may have at least two modes of operation, wherein a first mode of operation may be a training mode where the end point device may be arranged to determine the physical properties of the communication connection, and wherein a second mode of operation may be a data processing mode, where the end point device may be arranged to compare the previously determined physical properties with currently determined physical properties.

According to a further embodiment of the present disclosure, the end point device may have at least two modes of operation, wherein a first mode of operation may be a training mode where the end point device may be arranged to determine the physical properties of the communication connection, and wherein a second mode of operation may be a data processing mode, where the end point device may be arranged to compare the previously determined physical properties with currently determined physical properties, the method may further comprise receiving a reset key, and upon receipt of the reset key, performing any one or more of setting a flag in a non-volatile memory element of the end point device, executing the training mode, and executing the training mode after the next reconnection of the device.

According to a further embodiment of the present disclosure, the end point device may be arranged to switch to the training mode upon receiving a reset key.

According to a further embodiment of the present disclosure, the end point device may further comprise a non-volatile memory element for storing a flag, wherein the flag may be indicative of at least one of having received the reset key, assuming the training mode, and assuming the training mode after the next reconnection of the end point device.

According to a further embodiment of the present disclosure, the end point device may be arranged, after storing the flag, to determine the physical properties of the communication connection after the next reconnection of the end point device.

According to a further embodiment of the present disclosure, the end point device may be arranged, to, after having determined the physical properties of the communication connection in the training mode, switch from the training mode to the data processing mode.

According to a further embodiment of the present disclosure, the method may further comprise after having determined the physical properties of the communication connection in the training mode, switching from the training mode to the data processing mode.

The end point device may have two modes of operation, a training mode where the physical properties, in particular a value related to the physical properties is not yet fixed or where the physical properties will be redetermined for future comparison, and a data processing mode of which may be seen as the normal mode of operation for the end point device, e.g., for communicating between end point devices.

Once an end point device has assumed the training mode, the end point device is immediately, or after a defined action, determining physical properties of the communication connection. The device then stores the physical properties into a non-volatile memory as reference properties. Once the physical properties have been determined, the end point device may automatically, or again after a defined action, which may be the same or different, transition to the data processing mode. In the data processing mode, a communication connection may be established between the end point device and a further end point device, communication node or host. In particular, in that communication connection, the end point device may enable the encryption/decryption functionality so that all data or a subset of data received at one data interface of the data interfaces is encrypted before being transferred onwards, i.e., to a communication partner outside of the end point device and connected to the other one of the data interfaces, and data received at said other one of the data interfaces is decrypted before being transferred onwards, i.e., to a communication partner outside of the end point device and connected to the one data interface of the two data interfaces.

The end point device may be arranged to continuously or intermittently, i.e., after each data packet, after a defined number of data packets, after a defined time interval, or a combination thereof, determine the current physical properties of the communication connection. Upon determination of the current physical properties and comparison of the current physical properties with previously determined physical properties, the end point device may determine whether the communication connection has been tampered with.

E.g., in case the currently determined physical properties do not (significantly) deviate from the previously determined physical properties, the communication connection may be maintained as long as the situation does not change.

The device may, dependent on the presence of the flag and/or after receipt of the reset key, switch to the training mode after connection to a physical or wireless communication medium, upon reconnection or after a power cycle, e.g. a disconnection from a physical communication medium and a reconnection thereto.

Alternatively, in case the currently determined physical properties deviate from the previously determined physical properties to a degree that is considered non-identical anymore, the device may be arranged to initiate measures in reaction to said determined non-identity as previously described.

In order to initiate the training mode or reinitiate the training mode, the end point device may be arranged to receive a dedicated signal, for example, may receive a reset key. The reset key may be a cryptographic key, which the end point device may verify and in particular authenticate. Once the end point device has received the reset key and has verified its authenticity, the end point device may assume immediately or after a defined action the training mode. For example, the end point device may immediately switch into the training mode or may arrange that the training mode is assumed after for example a connection or reconnection of the end point device to the communication connection, e.g., after connecting the end point device to a physical communication connection, like a cable. The end point device may thus receive the reset key, and may initiate the training mode after being disconnected from the current communication connection, and reconnected to a, e.g., different communication connection, upon which reconnection, the end point device assumes the training mode. To reliably include to the training mode after disconnection and reconnection of the end point device, a memory flag may be provided, which may be set up on or after receipt and/or verification of a reset key, and which may in particular remain set, even when the end point device is unplugged from a current communication connection, and therefore may be powered down. The flag may thus be set in a non-volatile memory, in particular a non-volatile random access memory that can be set and erased by the end point device, thereby enabling the end point device to assume the training mode repeatedly. According to one embodiment, the flag is set during manufacturing so that the first time an end point device according to this disclosure is connected to a host, the training mode is initiated.

The reset key may be unique to a single end point device, a pair of end point devices, in particular a pair of end point devices that comprise the same encryption/decryption key, or even a plurality of end point devices.

According to a further embodiment of the present disclosure, in the data processing mode, as long as the comparison determines that the previously determined physical properties and the currently determined physical properties are substantially identical, data received at the first data interface may be encrypted before transmitting onwards from the second data interface, and data received at the second data interface may be decrypted before transmitting onwards from the first data interface.

According to a further embodiment of the present disclosure, while the communication connection may be maintained, encrypting data received at the first data interface before transmitting onwards from the second data interface, and decrypting data received at the second data interface before transmitting onwards from the first data interface.

Thus, as long as the end point device determines that the communication connection has not been tampered with, the communication link to another end point device, a communication connection to another communication entity or host device is maintained as is the previously described encryption and decryption of data between the data interfaces.

By providing said encryption and decryption functionality, data transmitted between two end point devices may be secured. Since the data between two end point devices is encrypted, a malicious third party may neither determine the content of the data nor may change the transmitted data, at least not without being detected. At the same time, any tampering with the connection itself, i.e., disconnection of one end point device from the communication connection, at least with one of its data interfaces, may be determined by the resulting change in the physical properties, and the end point device itself may disable the encryption/decryption. The communication partner, i.e., the end point device at the other end of the communication link and likewise decrypting/encrypting the data to be transmitted to the end point device may determine said disabling of the encryption/decryption simply by not receiving encrypted data anymore.

According to a further embodiment of the present disclosure, the end point device may be arranged to receive the reset key via at least one of one of the data interfaces from an external device connected thereto, via a reset hardware module connected to one of the data interfaces and via a wireless communication connection between the device and an external device, for example a Bluetooth or BLE communication connection.

In other words, the end point device may transparently receive the reset key from the outside of the end point device by a suitable communication means, which can be the same communication connection the encrypted/decrypted data is transmitted or may be a separate communication means as in the case of an additional wireless communication connection like Bluetooth or Bluetooth low energy. For example, the reset key may be sent from an application running on an external device, like a host device connected to one of the data interfaces, or a mobile device, which itself is capable to establish a Bluetooth or BLE communication connection.

According to a further embodiment of the present disclosure, the end point device may be arranged to perform a cryptographic handshake before receiving a reset key from an external device, wherein the cryptographic handshake may comprise the end point device being arranged to receive random challenge data, compute response data, for example by computing a hash value of the challenge data and a cryptographic key, and transmit the response data to the external device.

According to a further embodiment of the present disclosure, the method may further comprise enabling a device condition in which the end point device may be arranged to accept a reset key, wherein the end point device may be arranged to accept the reset key only after enabling the device condition, performing a cryptographic handshake before receiving a reset key from an external device, wherein the cryptographic handshake may comprise the steps receiving random challenge data, computing response data, for example by computing a hash value of the challenge data and a cryptographic key, and transmitting the response data to the external device.

By performing a cryptographic handshake, the device or entity sending the reset key may assure that it is connected to a device that is authorized to receive the reset key, and which is in particular not a malicious device trying to spoof the reset key. The device sending the reset key may itself be a trustworthy device and may therefore not be required to authenticate itself.

In the case that the end point device has verified its authenticity by performing the cryptographic handshake, i.e., returning data that has been encrypted with a key only an authentic end point device may have, it may be conceivable that the reset key is transmitted in a readable form as it is assured that the recipient of the reset key is a trustworthy device. Likewise, it is conceivable that the reset key is not a device specific key as it is assured that the reset key is only sent to trustworthy devices. Still further, the device sending the reset key may determine from the returned cryptographic data in the cryptographic handshake which reset key to send to the end point device. For example, the reset key may depend on the encryption/decryption key, hardcoded in the memory element of the end point device, and by receiving response data that uses the encryption/decryption key, the device sending the reset key may select the proper reset key from a plurality of reset keys.

According to a further embodiment of the present disclosure, the end point device may be arranged, upon receiving a reset key, to verify authenticity or correctness of the reset key by comparing the reset key with a key stored in the device, and upon positive verification of the reset key, the end point device may be arranged to switch to the training mode.

According to a further embodiment of the present disclosure, the key received by the end point device is subsequently processed to determine a reference key, for example by a hash function. The same function is applied on the internally stored reset key and the result is compared with the reference key.

According to a further embodiment of the present disclosure, the method may further comprise upon receiving a reset key, verifying authenticity or correctness of the reset key by comparing the reset key with a key stored in the end point device, and upon positive verification of the reset key, assuming the training mode.

According to a further embodiment of the present disclosure, the method may further comprise maintaining the communication link as long as the comparison determines that the previously determined physical properties and the currently determined physical properties are substantially identical, otherwise performing at least one action out of the group consisting of disabling the communication link, and providing an indication, for example to an external device, that the physical properties have changed.

Alternatively to receiving a clear text reset key, the device may in turn have a further key stored which is used to authenticate or at least verify the reset key. For example, the received reset key may simply correspond to, i.e., is identical to, a stored reset key, and by comparing the received reset key with the stored reset key, the device may determine that the reset key is indeed genuine. It is also conceivable that the received reset key, and the stored reset key correspond to two associated keys in a public-private key system.

According to a further embodiment of the present disclosure, the end point device may further comprise an actuator, wherein the actuator may be arranged to enable a device condition in which the end point device may be arranged to accept a reset key, and wherein the end point device may be arranged to accept the reset key only after engaging the actuator to enable the device condition.

According to a further embodiment of the present disclosure, engaging the actuator may enable the end point device to perform the cryptographic handshake.

In other words, the actuator may set the end point device into a specific mode or condition where the end point device is expecting the reset key. Only upon engaging of the actuator, the end point device may accept a received key as the reset key. Previously described security measures like cryptographic handshake or relying on a further comparison of the received key with stored key may be implemented additionally. In particular, it may be conceivable that the engaging of the actuator enables the end point device to perform the cryptographic handshake. For example, after engaging of the actuator, the device is subject to a mode where it is expecting the random challenge data, and any data received may be used as said random challenge data, which in turn triggers the computation of the response data and returning the response data by transmitting the response data to the external device.

According to a further embodiment of the present disclosure, the end point device may further comprise a third data interface, wherein the third data interface may be an internal data interface, wherein the third data interface may be enabled after engaging the actuator, and wherein the end point device may be arranged to receive, via the third data interface, the reset key and/or the random challenge data, and to transmit the response data.

The third data interface may thus emulate an internal device of the end point device, which may specifically be dedicated to receiving the reset key and/or the random challenge data, and to transmit the response data. Thereby, the functionality of enabling the training mode is further protected as the training mode may only be enabled after a physical interaction with the end point device occured. Further, it is conceivable that after engaging the actuator, the third data interface is active only for a defined period of time, e.g., one second, two seconds, three seconds, four seconds, five seconds, 10 seconds, 20 seconds, 30 seconds, one minute, so that the reset key and or the random challenge data can only be received within said defined period of time.

Once the third data interface has received the reset key, the third data interface may be disabled again. Alternatively, the third data interface may further provide the functionality to determine physical properties of the communication connection, for example by one or more sensor elements connected to the third data interface. The determined physical properties may then be stored in the end point device and be accessible by the end point device, even after disablement of the third data interface.

### BRIEF DESCRIPTION OF THE DRAWINGS

The present invention will now be described with reference to the accompanying drawings, in which:
Figure 1 shows an overview of an exemplary embodiment of a communication scenario according to the present disclosure.
Figure 2 shows a detailed view of an exemplary embodiment of an end point device for transmitting data according to the present disclosure.
Figure 3 shows an exemplary embodiment of a communication method according to the present disclosure.
Figure 4 shows a detailed view of a further exemplary embodiment of an end point device for transmitting data according to the present disclosure.
Figure 5 shows an exemplary embodiment of a cryptographic handshake according to the present disclosure.

### DETAILED DESCRIPTION

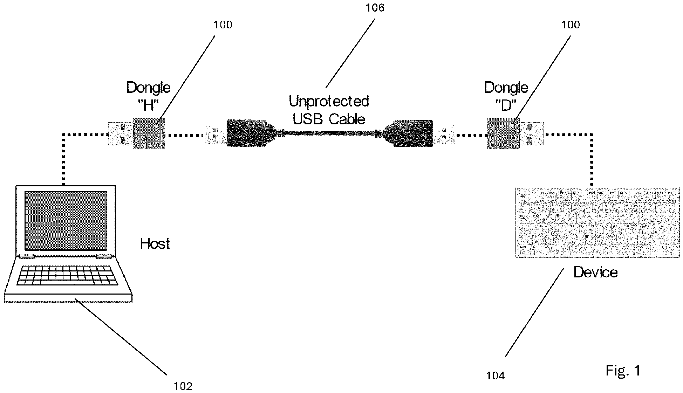

Now referring to Figure 1, which shows an overview of an exemplary embodiment of a communication scenario according to the present disclosure.

Figure 1 shows the application of a pair of end point devices 100 for transmitting data in a communication scenario. Two end point devices 100, which are essentially identical, are used to protect a communication link 106, in the exemplary embodiment of figure 1, a USB cable connection. The communication scenario involves two external or target devices, between which a communication connection is established, exemplarily a host device 102 and a client device 104. In the exemplary embodiment of figure 1, the host device 102 is for example a personal computer, while the client device 104 is for example a keyboard. Of course, any two devices intended for communication with one another may be used as external devices, for example, a surveillance camera connected to a video recording or monitoring station.

In the exemplary embodiment of figure 1, the end point devices for transmitting data 100 are embodied as USB enabled devices and are referred to as "dongles", namely dongle "H" as the end point device 100 on the host device side and dongle "D" as the end point device 100 on the client device side.

Each of the end point devices 100 are connected in between one side of the communication link 106, i.e., the USB cable, and one of the host or client device. Thereby, the pair of end point devices 100 accept the initially unprotected communication connection between the target devices 102,104 in their midst, and connect themselves to the host device 102 and the client device 104. Thus, data flowing from one of the host device 102 and the client device 104 to the other one of the client device 104 and the host device 102 are required to transition through both end point devices 100 at each side of the communication link 106.

As a result, data flowing from, for example, the client device 104 to the host device 102 first needs to transition through end point device 100 (dongle "D") on the right side of figure 1, through the communication connection 106/the USB cable and then again through end point device 100 (dongle "H") on the left side of figure 1, to arrive at the host device 102. In this scenario, end point device 100 (dongle "D") on the right side of figure 1 may encrypt any data received from the client device 104 and transmits said encrypted data onwards and towards host device 102, and thereby through the communication connection 106 in an encrypted manner. Subsequently, end point device 100 (dongle "H") on the left side of figure 1, receives the encrypted data, decrypt its and transmits said decrypted, i.e. original, data onwards and towards host device 102.

Ultimately, host device 102 receives unencrypted data identical to the unencrypted data originating from client device 104, however, the data was encrypted when it was transported through the communication link 106. Thereby, the pair of end point devices 100 establish a transparent but secure communication connection between the client device 104 and the host device 102.

In case the client device 104 would be receiving data from the host device 102, the encryption and decryption roles of the end point devices 100 would be reversed. In this communication scenario, end point device 100 (dongle "H") on the left side of figure 1 may encrypt any data received from the host device 102 and transmits said encrypted data onwards and towards client device 104, and thereby through the communication link 106 in an encrypted manner. Subsequently, end point device 100 (dongle "D") on the right side of figure 1, receives the encrypted data, decrypts it and transmits said decrypted, i.e. original, data onwards and towards client device 104.

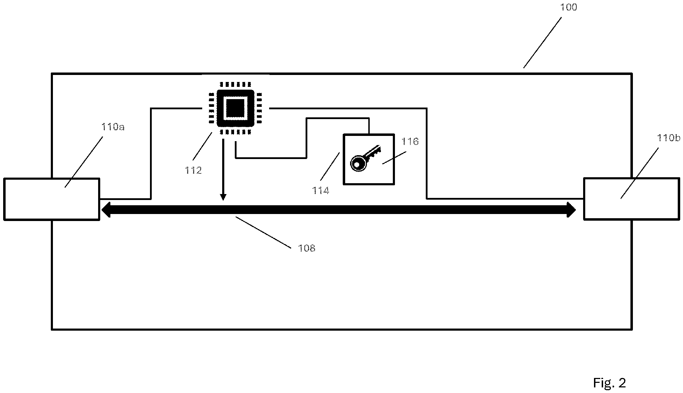

Now referring to Figure 2, which shows a detailed view of an exemplary embodiment of an end point device for transmitting data according to the present disclosure.

An end point device 100 for transmitting data according to the present disclosure comprises at least a first data interface 110a and a second data interface 11 0b. Depending on the type of data interface, the data interfaces 110a,b may use identical or different electrical connectors. For example, the data interfaces 110a,b may use electrical connectors of the USB-A or USB-C type. Mixed types (for example USB-A for one data interface and USB-C for the other data interface), other standards and even a wireless connections may be conceivable.

Data received at one of the data interfaces 110a,b is transmitted towards the other one of the data interfaces 110a,b via an internal data transmission 108 and then onwards from said data interface to a further device connected thereto externally. The end point device 100 further comprises a processing element 112 and a memory element 114. The memory element 114 may be, for example, a secure element, and may be storing an encryption/decryption key 116. The processing element 112 may use the encryption/decryption key 116 to encrypt or decrypt data received at one of the data interfaces 110a,b to be transmitted onwards from the other one of the data interfaces 110a,b. Depending on the type of encryption/decryption algorithm, the encryption and decryption may essentially be the same function on the data. E.g., a stream cipher algorithm as described and employed in this disclosure is an example of such an encryption/decryption algorithm. In other words, an encryption may employ a certain logical function on unencrypted data to encrypt said data, and the decryption may employ the same logical function on the encrypted data to decrypt the said. Thus, executing the same encryption/decryption algorithm twice on data results in obtaining again the identical original data. Thereby, the processing element may not be required to distinguish between encrypted and unencrypted data, as using the same logical function on either kind of data simply transfers unencrypted data into encrypted data and encrypted data to unencrypted data.

Thereby, the end point device 100 may simply perform the same logical function on data received at either one of the data interfaces 110a,b before transmitting onwards from the other one of the data interfaces 110a,b, resulting in that unencrypted data is encrypted when transmitted onwards while encrypted data is decrypted before transmitting onwards.

Memory element 114, in particular when embodied as a secure element, may be a read only memory element, where the stored encryption/decryption key 116 can only be read out by the processing element 112. Thereby, tampering with the encryption/decryption is prevented as the encryption/decryption key 116 is not accessible externally and also cannot be changed. For example, the encryption/decryption key 116 may be stored in the memory element 114 during manufacturing, e.g., in a secure facility of the device manufacturer.

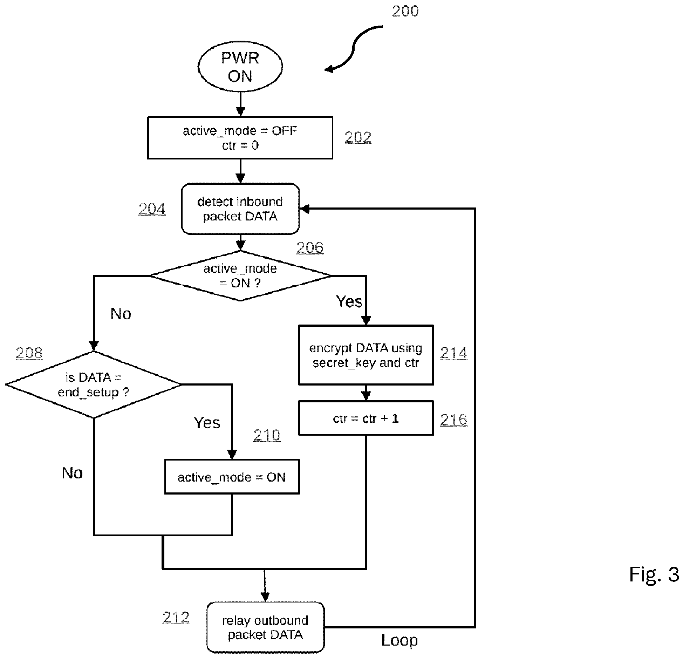

Now referring to Figure 3, which shows an exemplary embodiment of a communication method according to the present disclosure.

Figure 3 shows an exemplary encryption method 200. Assuming that the used encryption/decryption algorithm is a stream cipher where the encryption function essentially corresponds to the decryption function, the same method can be used for the decryption in a similar manner. Depending on the flow of data, i.e., from the first data interface 110a to the second data interface 11 0b, or vice versa, the method may employ the same or a different value for the stream cipher counter ctr.

Upon powering on of the end point device 100, which may for example be a switching on of a device 102,104 to which the end point device 100 executing the method 200 is connected to, thereby providing power to the end point device 100, or the establishing of a connection of the end point device 100 to said device 102,104, the end point device 100 starts and sets, in step 202, the active mode to off and the counter ctr to zero. "Active mode off" means that data received is not subjected to the encryption/decryption algorithm but may pass transparently from one data interface to the other data interface of the end point device 100. The counter ctr defines a particular computing position within the progression of the stream cipher. In other words, the stream cipher only symmetrically encrypts/decrypts data if the counter has the same value, i.e., the stream cipher is at the same position in its progression.

The method then, at step 204, detects incoming data, e.g., by an inbound packet being received at one of the first data interface and the second data interface. Upon reception of the packet or data, method 200 determines, in step 206, whether the active mode, i.e., the encryption/decryption functionality, is activated. After an initial power on, the active mode is set to off, and the method 200 continues to step 208 where it is determined whether the received data corresponds to an instruction data packet to end a setup mode. In other words, step 208 verifies whether the data received contains the explicit instruction to switch to the active mode, i.e., to commence encryption/decryption of received data.

In case the data received is determined, in step 208, to not instruct the end point device 100 to switch to the active mode, the data is simply transmitted to the other one of the first and second data interface to be transmitted onwards from said data interface. In other words, the received data is simply relayed from one of the data interfaces to the other data interfaces. Said relay or forwarding of the data in unamended form is performed in step 212. The method loops back to step 204 where it detects or receives the next incoming data packet without changing the active mode setting. Thus, until the data or data packet received contains the instruction to end the setup and activate the active mode, the device 100 simply transmits data received at one data interface to the other data interface, and vice versa, without changing the data.

In case the received data corresponds to the instruction to end the setup and activate the active mode, in step 208, the method branches to step 210 where the active mode of the end point device 100 is activated. The received data packet may be forwarded or relayed as before in step 212, or alternatively, the instruction to end setup may simply be discarded, which is not depicted in figure 3. In either case, method 200 continues in the loop back to step 204 to detect the next incoming data packet.

Once data is received and the active mode is set to on, in step 206, the method continues to step 214, where received data is encrypted using the encryption/decryption key 116 and the value from the counter ctr is used to define the position in the stream cipher progression used for the encryption. After the data has been encrypted, in step 216, the value of the counter ctr is increased by 1. Subsequently, the method 200 continues to step 212, transmitting or relaying the, now encrypted, data onwards from the other data interface, and returns to step 204, waiting for the next incoming data packet.

As described previously, the same method steps may be used to decrypt data, since the encryption algorithm and the decryption algorithm correspond to one another such that a double encryption (or a double decryption) again results in unencrypted data. In order to obtain unencrypted data from encrypted data, the value of the counter used for the decryption (or encryption) needs to correspond to the value of the counter used for the encryption (or decryption).

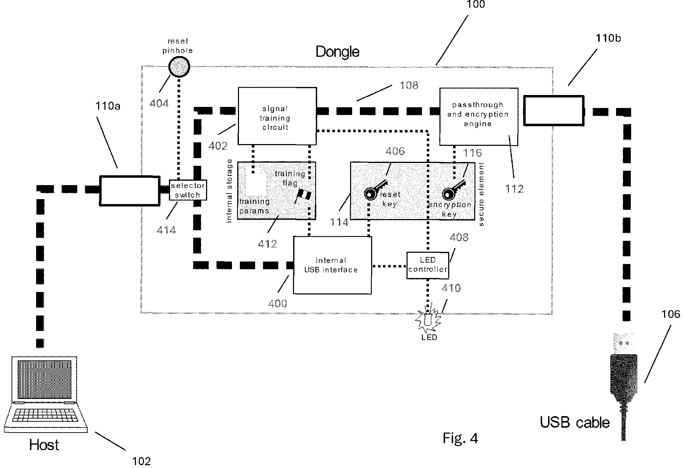

Now referring to Figure 4, which shows a detailed view of a further exemplary embodiment of a end point device for transmitting data according to the present disclosure.

Figure 4 shows a connection scenario of an end point device of 100 connected to or in between a host device 102 and the communication connection 106. When comparing to the scenario depicted in figure 1, end point device 100 would correspond to the left end point device 100 in figure 1, dongle "H".

End point device 100 comprises a first data interface 110a and a second data interface 110b. Additionally, in the scenario of figure 4, end point device 100 comprises an internal USB interface 400, which can be connected to the data interfaces by a selector switch 414. An actuator 404, in figure 4 exemplarily be a reset pinhole, is provided to allow engagement of the selector switch. Engaging the actuator 404 enables the internal USB interface 400 by changing the status of the selector switch 414 so that the selector switch 414 connects the internal USB interface 400 to be accessible via one of the first and second data interfaces on the internal data transmission 108.

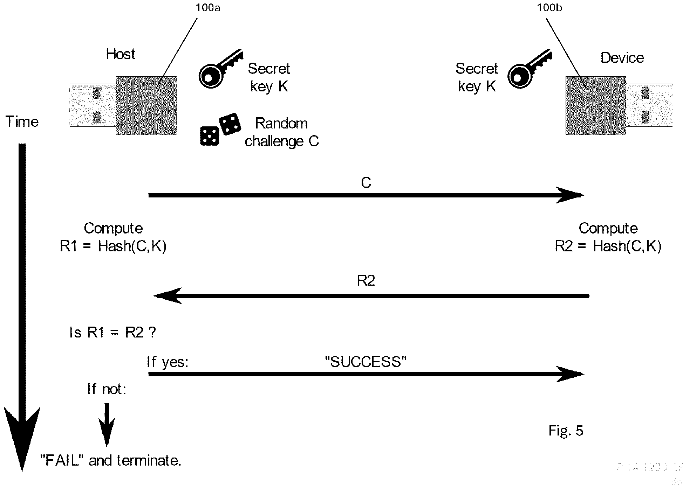

In order to initiate the training mode of the end point device 100, a user would engage actuator 404 resulting in that the internal USB interface 400 becomes externally visible. For example, after engaging the actuator 404, host device 102 may recognize the internal USB interface as a device available on its USB port to which the end point device 100 is connected to. Subsequently, upon recognizing the internal USB interface 400, the host device 102 may interact with the internal USB interface 400, for example via an application running on the host device 102. A first interaction may be the initiation of a cryptographic handshake as will be described with regard to figure 5.

After positively finishing the cryptographic handshake, the host device 102, or the application running on the host device 102, may provide a reset key to the end point device 100. The provided reset key may be compared with an internally stored reset key 406, for example, in the memory element/secure element 114. The reset key may be device dependent and may in particular be unique for each end point device 100, for a pair of end point devices 100, for a defined number of end point devices 100, or may generally be a valid reset key for all end point devices of a particular series, for example.

After receiving the reset key from the host device 102, the end point device 100 may compare said received key with the stored reset key 406. In case it is determined that the received reset key is a valid reset key, for example by a positive comparison of the received reset key with the stored reset key 406, the end point device 100 may set an indication, for example, store a flag, in an internal memory element 112, e.g., a non-volatile random access memory. Thus, said flag is stored in the internal memory element 112 and may in particular be retained even after powering off or unplugging of end point device 100 from the host device 102. End point device 100 may further comprise a visual indication element 410, for example, an LED, activated by a visual indication element controller 408, for example, an LED controller. The visual indication element 410 may indicate to a user that end point device 100 is set to a training mode, may indicate the determining of physical properties of the communication connection 106 and/or may indicate the end of the training mode and switching to the normal mode of operation.

Thus, by initiating the training mode by engaging the actuator 44, the end point device 100 ultimately stores said indication in a way that upon a next power cycle or a next connection or reconnection of the end point device 100 to a communication port, the end point device 100 recognizes the presence of the indication or flag in its memory element 412. In other words, after storing the indication/setting the flag, upon a next connection or power cycle, the end point device 100 recognizes that it should go into the training mode to determine physical properties of the communication connection 106.

After connecting, reconnecting or powering up of the end point device 100 with a stored indication, the selector switch 414 may reverse or may automatically reverse the connection to the internal USB interface 400 and thus establish a regular connection 108 between the first and second data interfaces. Subsequently, triggered by the stored indication, the end point device 100 initiates the training mode and determines the physical properties of the communication connection 106 by using the sensor element 402, for example, a signal training circuit. After determining the physical properties, said properties or parameters are again stored internally, for example, in memory element 412. Thereby, the end point device 100 has ascertained and stored the physical properties of the communication connection 106 at a defined point in time, and may compare physical properties determined at a future point in time with the determined physical properties, to detect any deviation of the previously determined physical properties from currently determined physical properties. Such a deviation may for example be an indication that the communication connection has been tampered with.

Thus, after determining the current physical properties, and storing said properties or parameters in the memory element 412, end point device 100 switches from the training mode into a normal mode of operation, for example a data processing mode. In the data processing mode, data received at either one of the first data interface 110a and the second data interface 110b is encrypted/decrypted by using the previously described stream cipher, and forwarded to the other one of the first data interface 110a and the second data interface 110b to be transmitted onwards to the outside of the end point device 100.

End point device 100 thereby for encrypting/decrypting incoming data assumes or switches to said normal mode of operation. At the defined time intervals, for example, at every received data packet, after a defined number of received data packets and/or after a defined period of time, end point device 100 uses sensor element 402 to determine the current physical properties of the communication connection 106. Subsequently, end point device 100 may compare the currently determined physical properties with the previously determined physical properties stored in the memory element 402. If said comparison determines that the currently determined physical properties essentially correspond to the previously determined and stored physical properties, end point device 100 may maintain the communication link as it may be reasonably sure that the communication connection has not been tampered with. In case said comparison determines that the currently determined physical properties do not correspond to the previously determined and stored physical properties, end point device 100 may initiate a defined action, for example may disable the communication link, provide an indication that the physical properties have changed to a user, and disable at least one of the encryption and decryption. Alternatively or additionally, the visual indication element 410 may be employed to indicate to a user a status of the comparison. For example, the visual indication element may provide one type of visual indication, signalling that the comparison was positive, i.e., that the previously determined physical properties correspond to the currently determined physical properties, and thus that the communication connection has not been tampered with, and/or may provide a further type of visual indication, signalling that the comparison was negative, i.e., that the previously determined physical properties do not correspond to the currently determined physical properties, and thus it may be that the communication connection has been tampered with.

Now referring to Figure 5, which shows an exemplary embodiment of a cryptographic handshake according to the present disclosure.

A cryptographic handshake may be performed between two devices, for example, an end point device 100a on a host device side and an end point device 100b on a client device side. Alternatively, the cryptographic handshake may be performed by a host device different from an end point device 100, and an end point device 100. In other cases, the cryptographic handshake may be used to verify that the respective other communication entity, in particular the device receiving the random challenge C, is an authentic device, i.e., a device that the device, which is sending the random challenge, is expecting.

In order to initiate the cryptographic handshake, the device sending the random challenge C, in figure 5 exemplarily the left end point device 100a on a host side, is initiating the handshake procedure. This is done by generating the random challenge C and sending the random challenge C to the device to be verified, in figure 5 exemplarily the right end point device 100b. End point device 100a is sending the random challenge C to end point device 100b. At the same time, end point device 100a is computing the value R1, which is, for example, the calculation of a hash value based on the random challenge C and the secret key K or at least a part thereof.

End point device 100b, receiving the random challenge C, itself is computing the value R2, which is similarly to the calculation of a hash value based on the random challenge C and the secret key K or at least a part thereof. After said calculation, the end point device 100b is returning value R2 to end point device 100a. Upon receiving value R2 from end point device 100b, end point device 100a compares its value R1 that it has generated itself with the received value R2, generated by end point device 100b. In case that R1 = R2, end point device 100a may be reasonably certain that end point device 100b is a legitimate device using the identical secret key K than end point device 100a. In this case, the communication between the two end point devices 100a,b may commence. In case R1 does not equal R2, end point device 100a may be reasonably certain that end point device 100b is either not a legitimate device, or at least not using the same secret key K, and that therefore a communication between the two end point devices cannot be established, at least since the correct encryption/decryption of data packets cannot be provided by such a pair of devices, where R1 does not equal R2. In this case, the communication of at least device 100a may be terminated.

It is to be understood that the invention is not limited to the embodiments described above, and various modifications and improvements may be made without deviating from the concepts described here. Any of the features described above and below may be used separately or in combination with any other features described herein, provided they are not mutually exclusive, and the disclosure extends to and includes all combinations and sub-combinations of one or more features described herein.

Finally, it should be noted that the term "comprising" not exclude other elements or steps, and that "a" or "one" does not exclude the plural. Elements that are described in relation to different types of embodiments can be combined. Reference signs in the claims shall not be construed as limiting the scope of a claim.

### FURTHER ASPECTS OF THE PRESENT DISCLOSURE

According to a first clause, there is provided an end point device for transmitting data, comprising
a first data interface,
a second data interface,
wherein data received at the first data interface is transmitted to the second data interface,
wherein data received at the second data interface is transmitted to the first data interface,
wherein at least one of the first data interface and the second data interface is arranged for establishing a communication connection to an external device,
a processing element arranged to encrypt and decrypt data,
wherein data received at the first data interface is encrypted before transmitting onwards from the second data interface,
wherein data received at the second data interface is decrypted before transmitting onwards from the first data interface, and
wherein the processing element is arranged for symmetric encryption and decryption, and
a memory element,
wherein the memory element is adapted to store an encryption/decryption key for use in the symmetric encryption and decryption,
wherein the encryption/decryption key is hardcoded in the memory element.

According to a second clause, there is provided an end point device according to the preceding clause, further comprising
a sensor element arranged to determine physical properties of the communication connection, and
the end point device is arranged to store the determined physical properties.

According to a third clause, there is provided an end point device according to the preceding clause,
wherein the end point device is arranged to compare previously determined physical properties with currently determined physical properties,
wherein in the event that the comparison determines that the previously determined physical properties and the currently determined physical properties are substantially identical, establish or maintain a communication link, and
wherein in the event that the comparison determines that the previously determined physical properties and the currently determined physical properties are substantially non-identical, perform at least one action out of the group consisting of disabling a communication link, providing an indication, that the physical properties have changed and disable at least one of the encryption and decryption.

According to a fourth clause, there is provided an end point device according to any one of the preceding second and third clauses,
wherein the end point device has at least two modes of operation,
wherein a first mode of operation is a training mode where the end point device is arranged to determine the physical properties of the communication connection, and
wherein a second mode of operation is an end point data processing mode, where the end point device is arranged to compare the previously determined physical properties with currently determined physical properties.

According to a fifth clause, there is provided an end point device according to the preceding clause,
wherein in the data processing mode, as long as the comparison determines that the previously determined physical properties and the currently determined physical properties are substantially identical, data received at the first data interface is encrypted before transmitting onwards from the second data interface, and data received at the second data interface is decrypted before transmitting onwards from the first data interface.

According to a sixth clause, there is provided an end point device according to any one of the preceding fourth or fifth clauses, wherein the end point device is arranged to switch to the training mode upon receiving a reset key.

According to a seventh clause, there is provided an end point device according to the preceding clause, further comprising
a non-volatile memory element for storing a flag,
wherein the flag is indicative of at least one of having received the reset key, assuming the training mode, and assuming the training mode after the next reconnection of the device.

According to an eighth clause, there is provided an end point device according to any one of the preceding sixth or seventh clause,
wherein the end point device is arranged to receive the reset key via at least one of one of the data interfaces from an external device connected thereto, via a reset hardware module connected to one of the data interfaces and via a wireless communication connection between the end point device and an external device.

According to a ninth clause, there is provided an end point device according to any one of the preceding clauses,
wherein the end point device is arranged to perform a cryptographic handshake before receiving a reset key from an external device,
wherein the cryptographic handshake comprises the end point device being arranged to
   receive random challenge data,
   compute response data, and
   transmit the response data to the external device.

According to a tenth clause, there is provided an end point device according to any one of the preceding sixth to ninth clauses,
wherein the end point device is arranged, upon receiving a reset key, to verify authenticity or correctness of the reset key by comparing the reset key with a key stored in the end point device, and
upon positive verification of the reset key, the end point device is arranged to switch to the training mode.

According to an eleventh clause, there is provided an end point device according to any one of the preceding clauses, further comprising
an actuator,
wherein the actuator is arranged to enable a device condition in which the end point device is arranged to accept a reset key, and
wherein the end point device is arranged to accept the reset key only after engaging the actuator to enable the device condition.

According to a twelfth clause, there is provided an end point device according to the preceding clause,
wherein engaging the actuator enables the end point device to perform the cryptographic handshake.

According to a thirteenth clause, there is provided an end point device according to any one of the preceding eleventh of twelfth clauses, the end point device further comprising
a third data interface,
wherein the third data interface is an internal data interface,
wherein the third data interface is enabled after engaging the actuator, and
wherein the end point device is arranged to receive, via third data interface, the reset key and/or the random challenge data, and to transmit the response data.

According to a fourteenth clause, there is provided an end point device according to any one of the preceding seventh to thirteenth clauses,
wherein the end point device is arranged, after storing the flag, to determine the physical properties of the communication connection after the next reconnection of the end point device.

According to a fifteenth clause, there is provided an end point device according to any one of the preceding clauses,
wherein the end point device is arranged to, after having determined the physical properties of the communication connection in the training mode, switch from the training mode to the data processing mode.

According to a sixteenth clause, there is provided a method for detecting unauthorized removal of an end point device, comprising
providing an end point device for transmitting data, comprising
   a first data interface,
   a second data interface,
   wherein data received at the first data interface is transmitted to the second data interface,
   wherein data received at the second data interface is transmitted to the first data interface, and
   wherein at least one of the first data interface and the second data interface is arranged for establishing a communication connection to another device,
   the method comprising
establishing a communication connection,
determining physical properties of the communication connection, and
comparing previously determined physical properties with currently determined physical properties,
   wherein in the event that the comparison determines that the previously determined physical properties and the currently determined physical properties are substantially identical, establish or maintain a communication link, and
   wherein in the event that the comparison determines that the previously determined physical properties and the currently determined physical properties are substantially non-identical, perform at least one action out of the group consisting of disabling a communication link, and providing an indication, that the physical properties have changed.

According to a sixteenth clause, there is provided a method according to the preceding clause,
wherein the end point device has at least two modes of operation,
wherein a first mode of operation is a training mode where the end point device is arranged to determine the physical properties of the communication connection, and
wherein a second mode of operation is a data processing mode, where the end point device is arranged to compare the previously determined physical properties with currently determined physical properties,
the method further comprising
receiving a reset key, and upon receipt of the reset key,
performing any one or more of setting a flag in a non-volatile memory element of the end point device,
assuming the training mode, and
assuming the training mode after the next reconnection of the end point device.

According to an eighteenth clause, there is provided a method according to the preceding clause,
wherein the end point device is arranged to receive the reset key via at least one of one of the data interfaces from an external device connected thereto, via a reset hardware module connected to one of the data interfaces and via a wireless communication connection between the device and an external device.

According to a nineteenth clause, there is provided a method according to the preceding clause, further comprising
enabling a device condition in which the end point device is arranged to accept a reset key,
   wherein the end point device is arranged to accept the reset key only after enabling the device condition,
performing a cryptographic handshake before receiving a reset key from an external device,
   wherein the cryptographic handshake comprises the steps
   receiving random challenge data,
   computing response data, and
   transmitting the response data to the external device.

According to a twentieth clause, there is provided a method according to the preceding clause,
wherein, upon receiving a reset key, verifying authenticity or correctness of the reset key by comparing the reset key with a key stored in the end point device, and
upon positive verification of the reset key, assuming the training mode.

According to a twenty-first clause, there is provided a method according to the preceding clause,
wherein, after having determined the physical properties of the communication connection in the training mode, switching from the training mode to the data processing mode.

According to a twenty-second clause, there is provided a method according to the preceding clause, further comprising
maintaining the communication link as long as the comparison determines that the previously determined physical properties and the currently determined physical properties are substantially identical, otherwise performing at least one action out of the group consisting of disabling the communication link, and providing an indication, that the physical properties have changed.

According to a twenty-third clause, there is provided a method according to the preceding clause, while the communication connection is maintained,
encrypting data received at the first data interface before transmitting onwards from the second data interface, and
decrypting data received at the second data interface before transmitting onwards from the first data interface.

According to a twenty-fourth clause, there is provided a computer program product or a computer readable storage medium comprising instructions which, when the program is executed by a processing element, cause the processing element to carry out the method of any one of clauses sixteen to twenty-three.

### LIST OF REFERENCE NUMERALS

- 100: End point device
- 102: Host device
- 104: Client device
- 106: Communication link
- 108: Data transmission (internal)
- 110a: First data interface
- 110b: Second data interface
- 112: Processing element
- 114: Memory element/secure element
- 116: Encryption/decryption key

- 200: Encryption/decryption method

- 400: Internal USB interface
- 402: Sensor element arranged to determine physical properties
- 404: Actuator
- 406: Reset key
- 408: Visual indication element controller
- 410: Visual indication element
- 412: Memory element (Flag/Physical properties)
- 414: Selector

## Claims

1. An end point device (100) for transmitting data, comprising
a first data interface (110a),
a second data interface (110b),
wherein data received at the first data interface (110a) is transmitted to the second data interface (110b),
wherein data received at the second data interface (110b) is transmitted to the first data interface (110a),
wherein at least one of the first data interface (110a) and the second data interface (110b) is arranged for establishing a communication connection to an external device,
a processing element (112) arranged to encrypt and decrypt data,
wherein data received at the first data interface (110a) is encrypted before transmitting onwards from the second data interface (110b),
wherein data received at the second data interface (110b) is decrypted before transmitting onwards from the first data interface (110a), and
wherein the processing element (112) is arranged for symmetric encryption and decryption, and
a memory element (114),
wherein the memory element (114) is adapted to store an encryption/decryption key (116) for use in the symmetric encryption and decryption,
wherein the encryption/decryption key (116) is hardcoded in the memory element (114).

2. The end point device (100) according to the preceding claim, further comprising
a sensor element (402) arranged to determine physical properties of the communication connection, and
the end point device (100) is arranged to store the determined physical properties.

3. The end point device (100) according to the preceding claim, the end point device (100) is arranged to compare previously determined physical properties with currently determined physical properties,
wherein in the event that the comparison determines that the previously determined physical properties and the currently determined physical properties are substantially identical, establish or maintain a communication link (106), and
wherein in the event that the comparison determines that the previously determined physical properties and the currently determined physical properties are substantially non-identical, perform at least one action out of the group consisting of disabling a communication link (106), providing an indication, that the physical properties have changed and disable at least one of the encryption and decryption.

4. The end point device (100) according to any one of the preceding claims,
wherein data comprises at least one data packet,
wherein the at least one data packet comprises at least one field, and
wherein the processing element (112) is arranged to encrypt and decrypt the information content of the at least one field,
and/or
wherein data comprises at least one data packet,
wherein the at least one data packet comprises a plurality of fields, and
wherein the processing element (112) is arranged to encrypt and decrypt the information content of only a subset of the plurality of fields,
and/or
wherein data and/or transmitted data comprises at least one data packet,
wherein the at least one data packet comprises a plurality of fields, and
wherein the processing element (112) is arranged to encrypt and decrypt the information content of the entirety of the plurality of fields.

5. The end point device according to the preceding claim,
wherein the at least one field is a field out of the group consisting of sync field, PID field, data field, CRC field and further field type, and /or
wherein the at least one data packet is a data packet out of the group consisting of token packet, data packet, handshake packet, state of frame packet, pre-error packet and further packet type.

6. The end point device according to any one of the preceding claims,
wherein the first data interface (110a) and second data interface (110b) are arranged as physical connectors each for connecting the end point device (100) to an external electrical device or cable.

7. The end point device (100) according to the preceding claim,
wherein the first and second data interface (110a,b) is a USB type interface, or
wherein one of the first data interface (110a) and second data interface (110b) is arranged each as physical connector for connecting the end point device (100) to an external electrical device or cable, and wherein the other one of the first data interface (110a) and second data interface (110b) is arranged as a wireless communication interface, or
wherein the first data interface (110a) and second data interface (110b) are arranged each as a wireless communication interface.

8. The end point device (100) according to any one of the preceding claims,
wherein at least one of the first data interface (110a) and second data interface (110b) comprises a physical connector that is arranged, once plugged in, to resist physical unplugging.

9. Set of two end point devices (100) for transmitting data according to any one of the preceding claims, wherein the first end point device (100) is connected to the second end point device (100) via a communication link.

10. The set according to the preceding claim,
wherein each of the two end point devices (100) comprise the same encryption/decryption key (116), so that data encrypted with one of the two end point devices (100) can be decrypted with the other one of the two end point devices (100).

11. The set according to any one of claims 9 or 10,
wherein the end point devices (100) are adapted to be arrangeable at opposite ends of a communication link (106) to encrypt data and/or data packages to be transmitted through the communication link (106).

12. The set according to any one of claims 9 or 11,
wherein the end point devices (100) are integrally formed with a physical communication connection.

13. Communication method for transmitting data,
providing two end point devices (100) for transmitting data according to any one of the preceding claims,
wherein each of the two end point devices (100) comprise the same encryption/decryption key (116), so that data encrypted with one of the two end point devices (100) can be decrypted with the other one of the two end point devices (100),
arranging said two end point devices (100) at opposite ends of a communication link (106) to encrypt data and/or data packages to be transmitted through the communication link (106).

14. Method for detecting unauthorized removal of a device, comprising
providing an end point device (100) for transmitting data, comprising
a first data interface (110a),
a second data interface (110b),
wherein data received at the first data interface (110a) is transmitted to the second data interface (110b),
wherein data received at the second data interface (110b) is transmitted to the first data interface (110a), and
wherein at least one of the first data interface (110a) and the second data interface (110b) is arranged for establishing a communication connection to an external device,
the method comprising
establishing a communication connection,
determining physical properties of the communication connection, and
comparing previously determined physical properties with currently determined physical properties,
wherein in the event that the comparison determines that the previously determined physical properties and the currently determined physical properties are substantially identical, establish or maintain a communication link (106), and
wherein in the event that the comparison determines that the previously determined physical properties and the currently determined physical properties are substantially non-identical, perform at least one action out of the group consisting of disabling the communication link (106), and providing an indication, that the physical properties have changed.

15. A computer program product or a computer readable storage medium comprising instructions which, when the program is executed by a processing element, cause the processing element to carry out the method of claim 13 or 14.
